# EUROPEAN PATENT APPLICATION

(11) **EP 0 741 501 A1**
(43) Date of publication of application: **06.11.1996**
(21) Application number: 95937251.7
(22) Date of filing: 16.11.1995
(51) Int. Cl.: H05B 3/16, H05B 3/26

(54) **ELECTRIC HEATING DEVICE AND METHOD OF MANUFACTURING THE SAME**

(30) Priority: 18.11.1994 RU 94041312
(71) Applicant: Voronkova, Zinaida, Petrovna, Nizhny Novgorod, 603000 (RU)
(72) Inventor: VORONKOVA, Zinaida, Petrovna, Nizhny Novgorod, 603000 (RU); BALYKOV, Alexandr Vasilievich, Nizhny Novgorod, 603005 (RU)
(74) Representative: Sparing - Röhl - Henseler Patentanwälte
(86) International application number: RU9500244
(87) International publication number: WO9616525

(57) **Abstract**

Claimed is an electric heating device comprising a dielectric substrate (I) made of a material capable of transmitting from 60 to 95% of infrared rays and having a volume electric resistance of at least I0⁵ Ohm/cm . A film (2) made of a semiconductive resistive material containing, as additives, transition d-elements is applied onto the substrate (I), both the film (2) material and the substrate (I) material being selected so as to meet requirements as to their adhesion.

As the substrate material, use is made of a glass ceramic SITALL having a specific composition or glass, while, as the semiconductive resistive material for the film (2), use is made of the Periodic system group IV elements, such as, e.g. titanium, zirconium and oxides thereof. As transition d-elements usable as additives, use is made of, e.g. copper, nickel, chromium either taken singly or in combinations.

Also claimed is a method for manufacturing the above-described electric heating device.

## Description

### Field of Engineering

The present invention relates to electric devices and, more specifically, to electric heating devices and to a method for manufacturing same.

### State in the Art

Currently, most rooms are heated with the help of special boiler houses for heating heat carriers which are next supplied through pipework to radiators installed in premises to be heated.

However, such systems are cumbersome, have a low heating efficiency in the order of 45 to 50%, are metal consuming, are unwieldy in operation and fabrication, do not provide an independent heat supply and control in premises, while their maintenance requires large expenditure and is labour consuming.

In this connection, a problem arose to develop novel high-efficiency and self-contained systems for heating buildings and structures by using electric energy.

Known in the prior art are electric heating assemblies (Ref. US Patent No. 3,978,316) consisting of a dielectric substrate made of zinc petalite and beta-quartz, and synthesized of the following oxides, percent by weight:

| | | | |
|---|---|---|---|
| ZnO | 12 - 25 | MgO | 0 - 3 |
| Al₂O₃ | 15 - 28 | SiO₂ | 50 - 65 |
| K₂O | 0 - 1 | Cs₂O | 0 - 5 |
| BaO 0 - 4 | | | |

the total content (K₂O+Cs₂O+BaO) being equal to 0.5%. This substrate carries, applied thereon, a layer of a thermally crystallizable glass comprising either PbO-TiO₂-SiO₂ with titanate crystals, or ZnO-Al₂O₃-SiO₂ with beta-quartz crystals. This layer represents an additional substrate, onto which an electrically heating current-conductive film is applied. This current-conductive film is made of noble metals, such as gold, platinum and rhodium with additions of the above-mentioned thermally crystallizable glass.

The above-cited patent also covers a method for manufacturing an electric heating assembly, whereby a layer of a thermally crystallizable glass is applied by a brush onto the base substrate, whereupon the whole structure is subjected to roasting at temperatures of higher than 1000^{o}C to convert it to a glass-crystalline mass. Next, onto the additional substrate a paste is applied, comprising the above-enumerated noble metals and thermally crystallizable glass, followed by roasting the whole at a temperature of at least 700-900^{o}C, thereby forming a current-conductive resistive film playing the role of an electric heating cell.

The prior-art electric heating assemblies are operated in the following manner:

Electric current voltage is applied to the film, whereby the base and additional substrates are heated up to 600-700^{o}C. Heat transfer is achieved through heat conduction and heat convection into the environment.

However, the prior-art electric heating assemblies call for considerable energy and labour consumption for their manufacture, as well as for use of high-cost materials (such as gold, platinum, rhodium).

Besides, such assemblies are short-lived in operation because of evaporation of the materials of the film at heating, and also because of a short life of their base and additional substrates due to thermal stresses arising between them at heating. The efficiency of such heating assemblies does not exceed some 70 to 75%.

Equally known in the prior art are electric heating elements and a method for their manufacture (Ref. US Patent 4,459,470).

The latter-cited electric heating element is a translucent glass body constituting a substrate, the entire surface of which is coated with an insulating translucent layer. Onto the latter is applied a polymeric current-conductive film containing, embedded thereinto, metallic particles. The entire surface of the substrate and the current-conductive film are coated with a second insulating layer of translucent material. Current pick-off bus bars are arranged at two opposite edges of the element.

The main purpose of such heating elements is to ensure transparency of glasses used under various operational conditions (such as misting, icing), for glasses used in vehicles (such as, for instance, for shielding light-protective toned windscreen and rear-view glasses of motor-cars) or in building structures (for window openings).

The above-cited electric heating element are operated in the following manner: a voltage of from 30 to 50 V is applied to its current pick-off bus bars, whereafter its polymeric current-conductive film gets decomposed to form current-conductive oxidic layers through which the substrate is heated. With this structural arrangement, heat transfer is effected through heat conduction due to direct contact of current-conductive oxidic layers with the substrate.

Unfortunately, when such heating elements are operated, there appears a danger of an electric break-down on the outer surface of the translucent glass body in question due to its enhanced surface electric conduction. Besides, since the body in question is transparent for infrared rays, the greater portion of the heat thus-received is dissipated and the efficiency of such elements does not exceed some 50-60%. Furthermore, because of the need to ensure translucence of the body, a first and a second translucent electroinsulating layers are applied onto it, whereby the structure of the cited heating element is made much costlier and complicated. After burning-out its current-conductive oxidic layer with metallic particles embedded into it, the electric heating element contains harmful substances which become liberated in the process of operation to thereby pollute the environment.

Also known in the prior art is an electric heatung device (Ref. USSR Inventor's Certificate No. 671,677) taken by the Authors of the present invention as a prototype. The latter-cited device comprises a dielectric substrate made of a borosilicate glass, onto which is applied a base current-conductive film based on tin dioxide with additions of antimony and boron. The surface of the base current-conductive film carries, applied thereonto, an additional current-conductive film consisting of tin dioxide with additions of antimony and boron.

Operation of the latter-cited electric heating device is based upon heat transfer from the resistive film by heat conduction of the substrate and by heat radiation from the film surface.

Howvever, this type of heat transfer to electric heating elements is conducive to considerable electric energy losses and predetermines a comparatively low efficiency of the entire structure.

Moreover, antimony and boron present in the base current-conductive film, as additives, become volatilized at high temperatures, thus polluting the environment and shortening the service life of the electric heating device.

### The Essence of the Present Invention

The present invention seeks to solve the problem of developing an electric heating device and a method for manufacturing such a device, in which, owing to a suitable choice of the materials constituting the substrate and the film and also owing to a suitable manufacturing procedure, it would become possible to conceive a highly efficient, environmentally safe, and simple-to-manufacture and to operate electric heating device capable of heating various premises.

The above-formulated problem is solved owing to the fact that in an electric heating device comprising a dielectric substrate, onto which a film is applied made of a semiconductive resistive material containing additives, said film being connected via bus bars to an energy supply source, in accordance with the present invention, as material for said dielectric substrate, use is made of a material transmitting from 60 to 95% of infrared rays and having a volume electric resistance of at least I0⁵ Ohm/ cm, as said additives to the semiconductive resistive material, use is made of transition d-elements, said film and substrate materials being selected so as to meet specific conditions for their adhesion.

It is possible to use, as material for the substrate, a glass ceramic SITALL having the following composition, wt.%:

| | | | |
|---|---|---|---|
| R₂O | 5 - 9 | RO | 5 - 12 |
| R₂O₃ | 3 - 10 | RO₂ | 1 - 6 |
| SiO₂ being the balance, | | | |

wherein RO, R₂O, R₂O₃, RO₂ represent, respectively, alkaline-earth elements oxides, alkali elements oxides, oxides of the Periodic system group III elements, and dioxides of the Periodic system group IV elements.

It is also possible to employ, as material for the substrate, the per se known glass of the following composition, wt.%:

| | | | |
|---|---|---|---|
| R₂O | 12 - 16 | RO | 4 - 6 |
| Al₂O₃ | 3.5 - 4 | R₂O₃ | 0.09 - 0.I |
| SiO₂ being the balance, | | | |

wherein R₂O,RO, R₂O₃ represent, respectively, alkali elements oxides, alkaline-earth elements oxides, and oxides of the Periodic system group III elements.

It is advisable that, as said semiconductive material for the film, use be made of the Periodic system group IV elements, such as, for instance, titanium, zirconium and oxides thereof, and, as said transition d-elements employed as additives, use be made, for instance, of copper, nickel, chromium taken both singly and in combinations.

This choice of the substrate and film materials ensures the best heat transfer into a space to be heated at the minimum electric energy consumption.

It is also advisable that from the side of the film made of the semiconductive resistive material, a glass panel sealingly connected to the substrate be mounted.

This structural arrangement of the electric heating device provides optimum and stable conditions for its operation, prolongs its service life and renders it environmentally safe.

Furthermore, the above-formulated problem is solved with the help of a method for manufacturing an electric heating device by applying onto a dielectric substrate a film consisting of a semiconductive resistive material with additives, in which method, in accordance with the present invention, said film-forming material is applied onto the dielectric substrate by sputtering in a hermetically sealed volume at a temperature permitting diffusion of the film material into the substrate material to form a diffuse layer.

It is also advisable that the temperature during sputtering be maintained within from 300 to 900^{o}C, at a residual pressure of from I0⁻⁸ up to I0⁻³ atm.

An electric heating device manufactured in accordance with the above-described method comprises reliably deposited resistive and diffuse layers which ensure improved heat transfer conditions, stability in operation, environmental safety and a high efficiency.

### Brief Description of the Drawings

In what follows, the present invention is illustrated by its specific embodiments with reference to an appended drawing which shows the structure of an electric heating device realized in accordance with the present invention.

### Best Embodiment of the Invention

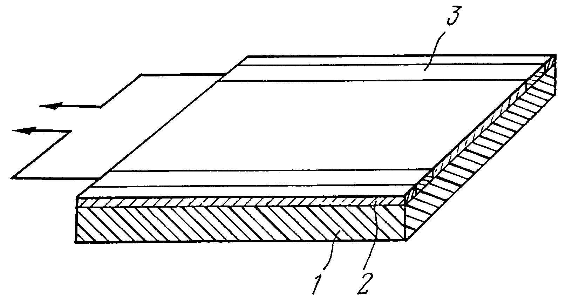

An electric heating device in accordance with the present invention comprises a dielectric substrate 1 (Fig. 1) made of a material transmitting from 60 to 95% of infrared rays and having a volume electric resistance of at least I0⁵ Ohm/ / cm, onto which, all over its surface, is applied a film 2 made of a semiconductive resistive material containing additives, transition d-elements being used as additives.

Current pick-off bus bars 3 are formed at two opposite sides of the film 2, at some distance from its edges, with the proviso that the total surface area of the bus bars 3 occupies not more than 5% of the film 2 surface area. The bus bars 3 serve to connect the electric heating device to a current supply source (not shown in the drawing).

A suitable choice of materials for the substrate 1 and film 2 represents one of indispensable prerequisites for serviceability of the proposed electric heating device with a high efficiency and a low power consumption.

The substrate 1 material and the film 2 one are selected so as to ensure their good adhesion.

As a suitable material for the dielectric substrate 1, use may be made of a glass ceramic SITALL having the following composition (%% by weight) and capable of transmitting up to 95% of infrared rays:

| | | | |
|---|---|---|---|
| R₂O | 5 - 9 | RO | 5 - 12 |
| R₂O₃ | 3 - 10 | RO₂ | 1 - 6 |
| SiO₂ being the balance, | | | |

wherein RO, R₂O, R₂O₃, RO₂ represent, respectively, oxides of alkaline-earth elements, oxides of alkali elements, oxides of the Periodic system group III elements, and dioxides of the Periodic system group IV elements.

It is equally possible to use, as a suitable substrate 1 material, a glass having the following composition (%% by weight) and capable to transmit up to 60% of IR rays:

| | | | |
|---|---|---|---|
| R₂O | 12 - 16 | RO | 4 - 6 |
| Al₂O₃ | 3.5 - 4 | R₂O₃ | 0.09 - 0.I |
| SiO₂ being the balance, | | | |

wherein R₂O, RO and R₂O₃ represent, respectively, oxides of alkali elements, oxides of alkaline-earth elements, oxides of the Periodic system group III elements.

As a suitable semiconductive resistive material for the film 2, use is made of the Priodic system group IV elements, such as, for instance, titanium, zirconium and oxides thereof, while as said transition d-elements usable as additives, use is made of, for instance, copper, nickel, chromium taken either singly or in combinations.

In more detail, the substrate 1- and film 2-forming materials containing transition d-elements will be discussed later on, with reference to the specific illustrative embodiments.

In accordance with the present invention, a method for manufacturing an electric heating device resides in depositing a semiconductive resistive film 2-forming material containing additives onto the substrate 1 by vacuum sputtering. In order to form a base resistive film layer and a diffuse film layer, the temperature during sputtering is maintained within the range of from 300 to 900^{o}C at a residual pressure ranging from I0⁻⁸ up to I0⁻³ atm.

At temperatures of below 300^{o}C diffusion proceeds stably, randomly so that the sought technical effect is not achieved. Conversely, at temperatures of above 900^{o}C the entire structure gets warped and the desired technical effect is not reached.

At residual pressures of below I0⁻³ atm., a great amount of oxides is formed in the resistive layer, thereby leading to a considerable rise in the electric resistance, to deterioration of the properties of the resistive layer and, ultimately, to worsening of the operational properties of devices. At residual pressure of above I0 atm., there takes place mainly the sputtering of the film-forming metal, the film thickness decreases, thus leading to an unstable operation of an electric heating device.

Realization of the substrate 1 from glass ceramic SITALL or from the glass having the above-specified composition and a volume electric resistance of at least I0⁵ Ohm/ cm ensures transmission of from 60 to 95% of infrared rays. Deposition of the film 2 containing additives onto the substrate 1 by vacuum sputtering at a temperature within the range of from 300 to 900^{o}C makes it possible to produce a resistive layer and a diffuse interlayer as a result of occurring physico-chemical processes (diffusion, chemosorption, adhesion). The composition of the resistive and diffuse layers of the film 2 is not altered in the course of operation under the effect of the ambient temperatures, thereby ensuring environmentally safe conditions for operation of an electric heating device on the whole. Incorporation of transition d-elements into the film composition contributes to the formation of a diffuse layer having predetermined electric properties.

The entire above-described structure of the electric heating device culminates in a highly efficient functioning of the device due to a low electric energy consumption and a high efficiency of the heat flux transfer.

The electric heating device in accordance with the present invention is operated in the following manner: as the device is connected via its bus bars 3 to an electric current (whether it be a DC or an AC) supply source, the electric energy is equivalently converted by the film 2 resistive layer into heat energy, thereby heating the resistive layer. The heat energy is transmitted from the film 2 resistive layer to the diffuse layer, thus heating the substrate 1. As the diffuse layer is warmed up, its electric resistance declines and becomes comparable (commensurate) with that of the resistive layer and, as a result, both layers start operating as two in-parallel connected resistors. Since the resistive characteristics of both layers become comparable, the electric circuit thus-composed functions stably. A decline in the total resistance of the proposed device permits to attain desired temperatures at a lower consumed power and, consequently, at lower electric energy consumption. A portion (60 to 95%) of the thermal energy is transmitted in the form of infrared rays through the substrate 1 material and leaves the substrate normally to its surface to reach a room (premises) to be heated, while the remaining portion (25-5%) of the thermal energy is transmitted to the room to be heated due to the heat conduction of the substrate 1 and due to convection to the surrounding space.

In this manner, owing to a suitable choice of the substrate 1 material possessing required properties and owing to the proposed film 2 deposition method, heat transfer in the proposed electric heating device is carried out by the most advantageous routes, namely: by heat transmission of infrared rays, by heat conduction and by convection, thereby ensuring a high (up to 85 to 95%) efficiency of the device at a low consumed power (some 200 to 300 Wt per 1 sq.m of the heating surface of the substrate 1 heated up to a temperature of 50 ± 5^{o}C).

Let us now examine some specific examples illustrating the use of various substrate 1 and film 2 materials with additives contained therein on the operation of the proposed electric heating device.

### EXAMPLE 1

As said glass ceramic SITALL product recommended for use as a substrate material, use was made of a product having the following composition, %% by weight:

| | | | |
|---|---|---|---|
| Li₂O | 3.0 - 6.0 | Na₂O | 3.0 - 5.0 |
| CaO | 4.0 - 5.0 | MgO | 3.0 - 3.5 |
| ZnO | 4.0 - 6.0 | Al₂O₃ | 6.0 - 9.0 |
| TiO₂ | 3.0 - 4.0 | ZrO₂ | 1.0 - 1.5 |
| SiO₂ being the balance. | | | |

The SITALL product comprises the following crystalline phases: quatrz-like solid solutions, ganite, and beta-spodumene. A SITALL-made substrate has the following main properties: it has a thermal stability up to 350^{o}C, it has a chemical resistance above the 1st hydrolytic class, it has a light translucence within the infrared spectral region of 92-95%, and its volume electric resistance is equal to 10⁹ Ohm/ cm.

Onto the substrate, a titanium film containing copper as additive was applied at a temperature of 450^{o}C and under a residual pressure of I0⁻⁵ atm., followed by a 10-minute holding. The electric heating device has an efficiency equal to 95%, and it consumes electric energy at a rate of 250 Wt per 1 sq. m of the heating surface of the device, its output temperature being equal to 60 ± 5^{o}C.

### EXAMPLE 2

The substrate material was SITALL of the same composition as in Example 1. Onto this SITALL substrate, a nickel-containing chromium film was applied at a temperature of 300^{o}C and a residual pressure of I0⁻³ atm., followed by a 12-minute holding.

The electric heating device thus-manufactured has an efficiency equal to 95% and it consumes electric energy at a rate of 300 Wt per 1 sq. mof the heating surface of the device, its output temperature being equal to 65 ± 5^{o}C.

### EXAMPLE 3

The substrate material was SITALL similar to that of Example 1. Onto the substrate, a zirconium film containing chromium and nickel as additives was applied at a temperature of 500^{o}C and a residual pressure of IO⁻⁶ atm., followed by an 8-minute holding period.

Such an electric heating device has an efficiency equal to 95%, it consumes electric energy at a power consumption rate of 230 Wt per 1 sq. m of the heating surface of the device, its output temperature being equal to 60 ± 5^{o}C.

### EXAMPLE 4

The substarte material was fire-polished glass having the per se known composition of the formula, %% by weight:

| | | | |
|---|---|---|---|
| Na₂O | 13.5 | K₂O | 2.0 |
| CaO | 3.5 | MgO | 3.0 |
| Al₂O₃ | 4.0 | SiO₂ being the balance. | |

This glass substrate had the following properties: its thermal stability is 60 + 5 C; its chemical resistance is IInd hydrolytic class; its volume electric resistance is I0⁵ Ohm/ / cm, and its light translucence within the infrared spectral region is up to 60%.

A titanium film containing copper as additive was applied onto the substrate at a temperature of 300^{o}C and a residual pressure of I0⁻⁵ atm., followed by holding up to 10 minutes.

Such an electric heating device has an efficiency equal to 80%, it consumes electric energy at a power consumption rate of 300 Wt per 1 sq. m of the heating surface of the device, its output temperature being equal to 50 ± 5^{o}C.

### EXAMPLE 5

The substrate was made of the same glass as in Example 4. A chromium film containing nickel as additive was applied onto the substrate at a temperature of 250^{o}C and a residual pressure of I0⁻³ atm., followed by a holding time for up to 15 minutes.

Such an electric heating device has an efficiency equal to 80%, it consumes electric energy at a power consumption rate of 350 Wt per 1 sq. m of the heating surface of the device, its output temperature being equal to 50 ± 5^{o}C.

### EXAMPLE 6

The substrate was made of the same glass as in Example 4. A zirconium film containing chromium and nickel as additives was applied onto the substrate at a temperature of 400^{o}C and a residual pressure of I0⁻⁶ atm., followed by a holding period of up to 20 minutes.

Such an electric heating device has an efficiency equal to to 80%, it consumes electric energy at a power consumption rate of 320 Wt per 1 sq. m of the heating surface of the device, its output temperature being 50 ± 5^{o}C.

The electric heating devices may be realized in various structural arrangements.

For heating the interior of premises, it is advisable to provide the device with a glass panel installed on the side of the film 2 et sealingly attached to the substrate 1.

The presence of this glass panel ensures optimum and stable conditions for operation of the device, prolongs its service life, and improves its environmental safety standards.

The devices in accordance with the present invention may be realized as wall- and ceiling-attachable or floor-installable modules. Calculations show that, in order to warm up and maintain a comfortable temperature within an interior (i.e. 20 to 24^{o}C), it is necessary that the device would have 1 to 3 sq.m of its surface per some 20 to 25 cub. m of an interior.

The electric heating devices of the present invention may be operated with self-contained power supply sources, they make it possible to automatically adjust and maintain desired temperature conditions within premises, thereby offering savings on electric energy consumption.

Consequently, the proposed electric heating device, its manufacturing method, and its structural design make it possible to develop highly effective, environmentally safe, structurally simple, automatically controllable self-contained heating systems. The proposed device offers enormous opportunities for a designer, since they are usable as a fire-place, and their exterior may be richly decorated.

It is obvious to any one skilled in the art that the range of applications of the present invention is extremely wide and many-sided.

### Industrial Applicability

The present invention may be advantageously used for heating buildings and structures, the saloons of various types of over-land, air-borne and water-borne transports, in household appliances.

## Claims

1. An electric heating device comprising a dielectric substrate (I) onto which is applied a film (2) made of a semiconductive resistive material containing additives, said device **characterized** in that, as material for said dielectric substrate (I), use is made of a material capable of transmitting from 60 to 95% of infrared rays and having a volume electric resistance of at least I0⁵ Ohm/ cm, and, as said additives contained in said semiconductive resistive material of said film (2), use is made of transition d-elements, said film (2) material and said dielectric substrate (1) material being selected so as to meet requirements as to their adhesion.

2. An electric heating device as claimed in Claim 1, **characterized** in that, as said dielectric substrate (I) material, use is made of glass ceramic SITALL having the following composition, percent by weight:
| | | | |
|---|---|---|---|
| R₂O | 5 - 9 | RO | 5 - 12 |
| R₂O₃ | 3 - I0 | RO₂ | 1 - 6 |
| SiO₂ being the balance, | | | |
wherein RO, R₂O, R₂O₃, RO₂ are, respectively, oxides of alkaline-earth elements, oxides of alkali elements, oxides of the Periodic system group III elements, and dioxides of the Periodic system group IV elements.

3. An electric heating device as claimed in Claim 1, **characterized** in that, as said dielectric substrate (I) material, use is made of the per se known glass having the following composition, percent by weight:
| | | | |
|---|---|---|---|
| R₂O | 12 - 16 | RO | 4 - 6 |
| Al₂O₃ | 3.5 - 4 | R₂O₃ | 0.09 - 0.I |
| SiO₂ being the balance, | | | |
wherein R₂O, RO, R₂O₃ are, respectively, oxides of alkali elements, oxides of alkaline-earth elements, and oxides of the Periodic system group III elements,

4. An electric heating device as claimed in Claim 1, **characterized** in that, as said semiconductive resistive material for said film (2), use is made of the Periodic system group IV elements, such as, e.g. titanium, zirconium and oxides thereof, and, as said transition d-elements usable as additives, use is made of, e.g. copper, nickel, chromium taken singly or in combinations thereof.

5. An electric heating device as claimed in Claims 1-4, **characterized** in that a glass panel (4) is arranged at the side of said film (2) made of said semiconductive resistive material, said panel (4) being sealingly attached to said substrate (I).

6. A method for manufacturing an electric heating device, which method resides in applying a film (2) made of a semiconductive resistive material containing additives onto a dielectric substrate (I) at a specific temperature and pressure, **characterized** in that said film (2) material is applied onto said dielectric substrate (I) by sputtering within a hermetically sealed volume at a temperature enabling diffusion of the film (2) material into the substrate (I) material to form a diffuse layer.

7. A method as claimed in Claim 6, **characterized** in that said sputtering operation is carried out at the temperatures ranging from 300 to 600^{o}C and under residual pressures ranging from I0⁻⁸ up to I0⁻³ atm.
